Europäisches Patentamt

European Patent Office

Office européen des brevets

(19)

(11) Veröffentlichungsnummer : **0 436 670 B1**

(12) **EUROPÄISCHE PATENTSCHRIFT**

(45) Veröffentlichungstag der Patentschrift :
15.04.92 Patentblatt 92/16

(21) Anmeldenummer : 89912896.1

(22) Anmeldetag : 17.11.89

(86) Internationale Anmeldenummer :
PCT/DE89/00721

(87) Internationale Veröffentlichungsnummer :
WO 90/05900 31.05.90 Gazette 90/12

(51) Int. Cl.⁵ : **G01G 7/06**

(54) **KAPAZITIVER WIEGEAPPARAT.**

(30) Priorität : 18.11.88 DE 3838990

(43) Veröffentlichungstag der Anmeldung :
17.07.91 Patentblatt 91/29

(45) Bekanntmachung des Hinweises auf die
Patenterteilung :
15.04.92 Patentblatt 92/16

(84) Benannte Vertragsstaaten :
FR GB

(56) Entgegenhaltungen :
WO-A-88/07182
DE-U- 8 814 406

(56) Entgegenhaltungen :
DE-U- 8 814 407
GB-A- 2 047 410
GB-A- 2 104 670
US-A- 4 237 989

(73) Patentinhaber : **JAKOB MAUL GMBH**
**Jakob-Maul-Strasse**
**W-6123 Bad König-Zell (DE)**

(72) Erfinder : **BRAND, Winfried**
**Am Hermannsberg 10**
**W-6120 Michelstadt (DE)**

(74) Vertreter : **Vogel, Georg**
**Pat.-Ing. Georg Vogel Hermann-Essig-Strasse**
**35 Postfach 11 65**
**W-7141 Schwieberdingen (DE)**

EP 0 436 670 B1

Jouve, 18, rue Saint-Denis, 75001 PARIS

## Beschreibung

Die Erfindung betrifft eine Waage mit digitaler Anzeige mit einem auf eine Federanordnung mit zwei parallel verlaufenden Blattfedern einwirkenden, relativ zu einem Gehäusebock bewegbaren Lastaufnehmer, wobei die Blattfedern zusammen mit einer mit dem Gehäusebock verbundenen Halterung und mit einem mit dem Lastaufnehmer verbundenen Tragteil einen Parallelogramm-Wiegemechanismus bilden, mit einem Kondensator mit zwei Kondensatorplatten, deren Abstand sich bei Belastung des Lastaufnehmers verändert und von denen eine zwischen den Blattfedern angeordnet und mit der Halterung über ein Isolierteil verbunden ist, dessen Kapazität als Maß für die Belastung auswertbar ist.

Bei bekannten Waagen der eingangs genannten Art, wie sie z.B. in der DE-PS 29 14 449 beschrieben sind, sind die beiden Kondensatorplatten zwischen den beiden Blattfedern angeordnet und mit der Halterung bzw. dem Tragteil über Isolierteile lösbar verbindbar. Die aus den Blattfedern, den Isolierteilen und den Kondensatorplatten bestehende Baueinheit kann dann mit dem Gehäusebock mittels Schrauben verbunden werden. Um bei der bekannten Waage die gewünschte Genauigkeit erreichen zu können, sind nicht nur die zwischen den parallel zueinander verlaufenden Blattfedern angeordneten Kondensatorplatten einzustellen, sondern auch die Einheit als Ganzes, was in der Regel bedeutet: drei Bauteile mit mindestens vier Schrauben optimal einzustellen. Dies wird gewöhnlich als Nachteil - weil vor allem zeitaufwendig - empfunden.

Ausgehend von dem obigen Stand der Technik liegt der Erfindung die Aufgabe zugrunde, die eingangs genannte Waage so weiterzubilden, daß das Einstellen unter Verringerung der Anzahl von Bauteilen deutlich einfacher und schneller erfolgen kann. Darüberhinaus sind die auf den Kondensator einwirkenden negativen Einflüsse zu minimieren.

Die gestellte Aufgabe wird erfindungsgemäß durch die kennzeichnenden Merkmale des Anspruches 1 oder des Anspruches 2 gelöst.

Man erkennt, daß die Erfindung jedenfalls dann verwirklicht ist, wenn eine der Blattfedern des Parallelogramm-Wiegemechanismus so ausgebildet ist, daß sie mit einer zwischen den Blattfedern angeordneten Kondensatorplatte einen Kondensator bildet. Nachdem der Parallelogramm-Wiegemechanismus mit dem Gehäusebock verbunden worden ist, ist nur noch eine einzige Kondensatorplatte einzustellen, und zwar mit Bezug auf die obere bzw. die untere Blattfeder.

Weitere zweckmäßige und vorteilhafte Ausgestaltungen der Erfindung gehen aus den Unteransprüchen hervor.

Eine besonders zweckmäßige Ausgestaltung der Erfindung sieht vor, daß die die Kondensatorplatte bildende Blattfeder in ihrer Draufsicht im wesentlichen rechteckförmig ist, wobei die dem Tragteil und die der Halterung zugekehrten Seiten der Blattfeder z.B. durch Stanzen herstellbare Ausnehmungen besitzen, die sich entlang des Tragteils und der Halterung unter Bildung von Halteschenkeln erstrecken. Hierbei ist es besonders vorteilhaft, wenn die Ausnehmungen rechteckförmig sind und den Abstand des Zentralabschnittes der Blattfeder von dem Tragteil bzw. der Halterung definieren.

Die die Kondensatorplatte bildende Blattfeder ist daher so auszubilden, daß sie zum einen die Elastizität einer herkömmlichen Blattfeder besitzt und zum anderen sicherstellt, daß die Kapazität sich linear mit der Belastung des Lastaufnehmers ändert.

Eine weitere zweckmäßige Ausgestaltung der Erfindung sieht bei einer Waage, bei der das Tragteil und die Halterung als U-förmige Blechprofile ausgebildet sind, wobei die Schenkel der Blechprofile mit den Blattfedern und die Basis der Halterung mit einem Haltestück des Gehäusebocks verbindbar sind bzw. ist, vor, daß die dem Haltestück zugekehrte Seite der Halterung Nuten bzw. Federn besitzt, die mit den Federn bzw. Nuten des Haltestückes lösbar verbindbar sind. Im Rahmen dieses Erfindungsgedankens ist es besonders zweckmäßig, wenn die vertikal sich erstreckenden Enden der U-förmigen Halterung zum Haltestück hin unter Bildung von einander zugekehrten Nuten abgebogen sind, die mit Federn des Haltestücks form- und kraftschlüssig verbindbar sind. Bei diesen Maßnahmen der Erfindung geht es im wesentlichen darum, die aus den Blattfedern und dem Tragteil sowie der Halterung gebildete Einheit mit dem Haltestück nicht nur einfach, sondern auch sehr genau verbinden zu können. Nachdem diese Einheit ihre Arbeitsposition eingenommen hat, muß sie nicht mehr eingestellt werden.

Dabei sieht eine besonders zweckmäßige Ausgestaltung vor, daß das Haltestück aus mindestens einem vom Gehäusebock vertikal nach oben abstehenden Profilabschnitt besteht, der mit dem Gehäusebock starr verbunden ist. Hierbei können diese Maßnahmen auch so getroffen sein, daß der horizontale Querschnitt des Profilabschnittes etwa L-förmig ist, wobei der mit der Nut der Halterung verbindbare Schenkel parallel zur Halterung verläuft.

Eine besonders exakte Verbindung zwischen der Einheit und dem Haltestück ist z.B. dann herstellbar, wenn mindestens zwei Profilabschnitte vorgesehen sind, deren längere Schenkel rechtwinklig zur Halterung verlaufen und sich zu ihren oberen Enden hin verjüngen. Hierbei können die Profilabschnitte über einen mit ihnen starr verbundenen Steg verbunden sein. Der Vorteil dieser Maßnahmen besteht ersichtlich darin, daß es sich im wesentlichen um Stanzteile mit geringen Toleranzen handelt, wodurch die Herstellung der gesamten Waage nicht nur schneller, sondern auch kostengünstiger erfolgen kann.

Einige Ausführungsbeispiele der Erfindung sind in der Zeichnung schematisch dargestellt und werden im folgenden näher erläutert. Es zeigen:

Fig. 1 einen Teil eines Vertikalschnittes entlang der Linie A-A gem. Fig. 3 durch eine Waage im entlasteten Zustand, bei der die zweite Kondensatorplatte unten angeordnet ist,

Fig. 2 einen Teil eines Vertikalschnittes durch eine Waage im entlasteten Zustand, bei der die zweite Kondensatorplatte oben angeordnet ist,

Fig. 3 einen Schnitt entlang der Linie B-B nach Fig. 1,

Fig. 4 einen Schnitt entalng der Linie C-C nach Fig. 1,

Fig. 5 einen Teil einer Halterung in perspektivischer Seitenansicht,

Fig. 6 die in Fig. 5 dargestellte Halterung in vertikaler Draufsicht und in Verbindung mit einem Haltestück,

Fig. 7 eine vertikale Draufsicht auf eine Halterung in einer anderen Ausführungsform,

Fig. 8 eine weitere Halterung mit einem Haltestück in perspektivischer Seitenansicht,

Fig. 9 einen Teil einer Verbindung zwischen einer Halterung und einem Haltestück, und

Fig. 10 eine vertikale Draufsicht auf die Halterung nach Fig. 8 in Richtung des Pfeiles IX.

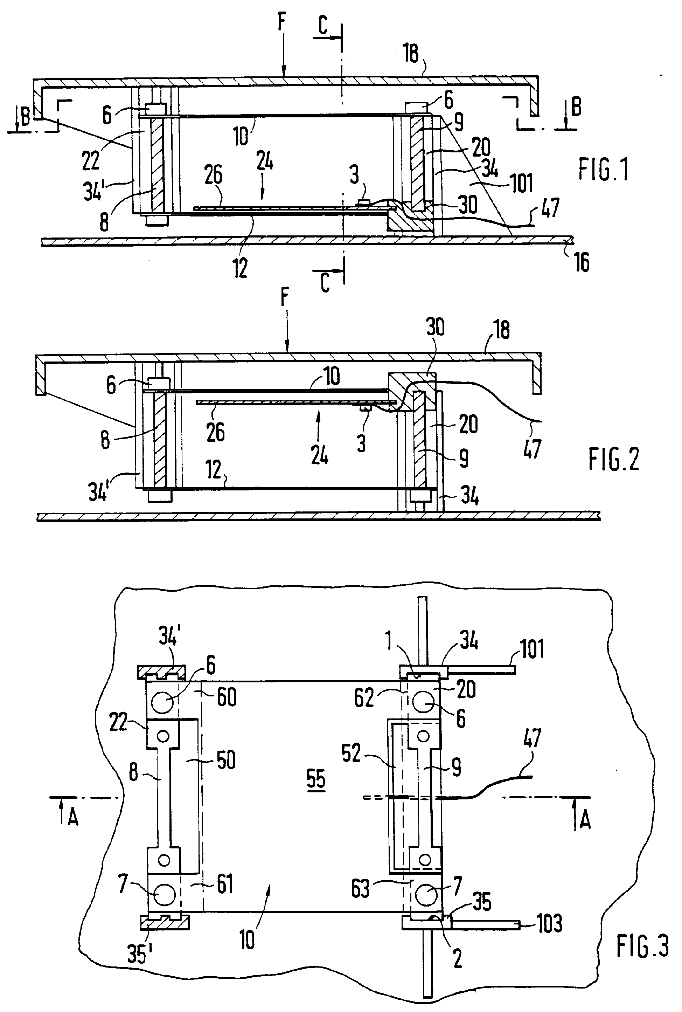

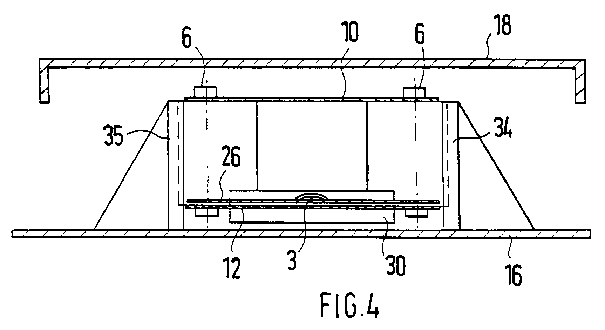

In den Fig. 1 bis 4 ist ein Teil einer Waage mit digitaler Anzeige mit einem auf eine Federanordnung mit zwei parallel verlaufenden Blattfedern 10 und 12 einwirkenden, relativ zu einem Gehäusebock 16 bewegbaren haubenförmigen Lastaufnehmer 18 dargestellt. Die Blattfedern 10 und 12 bilden zusammen mit einer mit dem Gehäusebock 16 verbundenen Halterung 20 und mit einem mit dem Lastaufnehmer 18 verbundenen Tragteil 22 einen Parallelogramm-Wiegemechanismus. Die Waage besitzt ferner einen Kondensator 24, dessen eine Kondensatorplatte 26 zwischen den beiden Blattfedern 10 und 12 angeordnet und im unbelasteten Zustand der Waage parallel mit diesen verläuft, während die andere Kondensatorplatte durch die Blattfeder 12 (Fig. 1) bzw. die Blattfeder 10 (Fig. 2) gebildet ist. Die innere Kondensatorplatte 26 ist über ein Isolierteil 30 mit der Halterung 20 verbunden. Die Blattfedern 10 und 12 sowie das Tragteil 22 und die Halterung 20 bilden eine Einheit, die in die Nuten 1, 2 der Haltestücke 34,35 von oben einsteckbar und mit diesen lösbar verbindbar ist. Die Haltestücke 34 und 35 sind mit dem Gehäusebock 16 einstückig ausgebildet und stehen vertikal nach oben ab. Die Nuten 1 und 2 sind einander zugekehrt und mit der Halterung 20 formschlüssig verbindbar.

Wie bereits ausgeführt, bildet die untere bzw. obere Blattfeder 12 bzw. 10 die erste Kondensatorplatte (Fig. 1 bzw. Fig. 2), während die zweite, vom Isolierteil 30 getragene Kondensatorplatte 26 zwischen der ersten Kondensatorplatte und der oberen bzw. unteren Blattfeder angeordnet ist. Das Isolierteil 30 besitzt eine querverlaufende Nut, die mit dem Steg 9 mittels einer Nut-Feder-Verbindung lösbar verbindbar ist. Die die Kondensatorplatte bildende Blattfeder 12 bzw. 10 deckt die zweite Kondensatorplatte 26 bodenseitig bzw. deckseitig ab. Der Abstand zwischen den beiden Platten ist, wie die Fig. 1 und 2 erkennen lassen, sehr gering und von der Belastung des Lastaufnehmers 18 abhängig.

Bei Belastung des Lastaufnehmers 18 nach Fig. 1, und zwar in Richtung der Kraft F, wird der Lastaufnehmer nach unten bewegt, wodurch der Abstand zwischen der Kondensatorplatte 26 und der unteren Blattfeder 12 vergrößert wird. Dadurch verringert sich die Kapazität des durch diese Platten gebildeten Kondensators. Die Kondensatorplatte 26 ist über die elektrische Leitung 47 an einen nicht dargestellten Meßwandler und weitere elektrische Geräte, die die Meßwerte des Kondensator digitalisieren, angeschlossen. Hierbei besteht ein Zusammenhang zwischen der gemessenen Kapazität und dem Gewicht des gewogenen Gegenstandes. Je mehr der Lastaufnehmer 18 belastet wird, um so größer ist der Abstand zwischen dem freien Ende der Kondensatorplatte 26 (Fig. 1) und der Blattfeder 12. Da das Isolierteil 30 mit der Halterung 20 unverrückbar verbindbar ist, haben die Bewegungen des Lastaufnehmers 18 keinen Einfluß auf die elektrische Leitung 47. Die Leitung 47 ist mit der Kondensatorplatte 26 fest verbunden, und zwar derart, daß die Kondensatorplatte zwei Schlitze besitzt, durch die das Ende der Leitung 47 geführt und von dieser unverrückbar gehalten ist. Diese Verbindung könnte jedoch auch durch Löten oder mittels Schrauben hergestellt werden.

Belastet man den Lastaufnehmer 18 nach Fig. 2, dann wird der Abstand zwischen dem freien Ende der Kondensatorplatte 26 und der Blattfeder 10 geringer. Auch in diesem Falle werden die Bewegungen des Lastaufnehmers 18 nicht auf die Leitung 47 übertragen, so daß störende Einflüsse gänzlich ausgeschlossen werden können. Die Halterung 20 und das Tragteil 22 sind Profilstücke mit jeweils vier durchgehenden Bohrungen und jeweils einem Steg 8 und 9 (vgl. Fig. 3). Die randseitigen Bohrungen dienen zur Aufnahme der Schrauben 6 und 7, durch die eine feste Verbindung zwischen der Halterung 20 und dem Tragteil 22 einerseits und den Blattfedern 10 und 12 andererseits herstellbar ist. Das Isolierteil 30 ist auf den Steg 9 aufgerastet.

Die aus den beiden Blattfedern 10 und 12 sowie der Halterung 20 und dem Tragteil 22 bestehende Einheit ist mit den Haltestücken 34 und 35 lösbar verbindbar. Die Haltestücke 34 und 35 sind über Stützen 101 und 103 mit dem Gehäusebock 16 verbunden. Nach der Herstellung einer solchen Verbindung kann eine feste Ver-

3

EP 0 436 670 B1

bindung zwischen dem Lastaufnehmer 18 und dieser Einheit hergestellt werden, und zwar durch die Haltestücke 34' und 35', die mit dem Lastaufnehmer 18 einstückig ausgebildet sein können. Die einander zugekehrten Seiten der Haltestücke 34' und 35' besitzen jeweils zwei Nuten und jeweils einen Steg und sind mit dem Tragteil 22 formschlüssig verbindbar.

Die Fig. 3 läßt ferner erkennen, daß die Blattfeder 10 in ihrer Draufsicht rechteckförmig ist und zwei rechteckförmige Ausschnitte 50 und 52 besitzt. Im vorliegenden Ausführungsbeispiel ist die Blattfeder 10 mit dem Tragteil 22 und der Halterung 20 verschraubt. Sie könnte jedoch mit diesen Teilen auch vernietet sein. Die Einschnitte 50 und 52 sind mit Bezug auf das Tragteil 22 und die Halterung 20 so angeordnet, daß der Zentralabschnitt 55 der Blattfeder 10 von diesen Teilen mit Abstand angeordnet ist.

Dadurch wird erreicht, daß die eigentliche Verbiegung der Blattfeder 10 im Bereich der Schenkel 60 bis 63 erfolgt. Diese Schenkel besitzen parallel zu den Stegen 8 und 9 verlaufende Schwächungs- und somit auch Biegelinien. Bei Belastung des Lastaufnehmers erfolgt die Durchbiegung der Blattfedern 10 und 12 gerade in diesen Bereichen. Eine S-förmige Verbiegung der Blattfedern, die sich nachteilig auf die Meßergebnisse auswirken kann, kann dadurch ausgeschlossen werden.

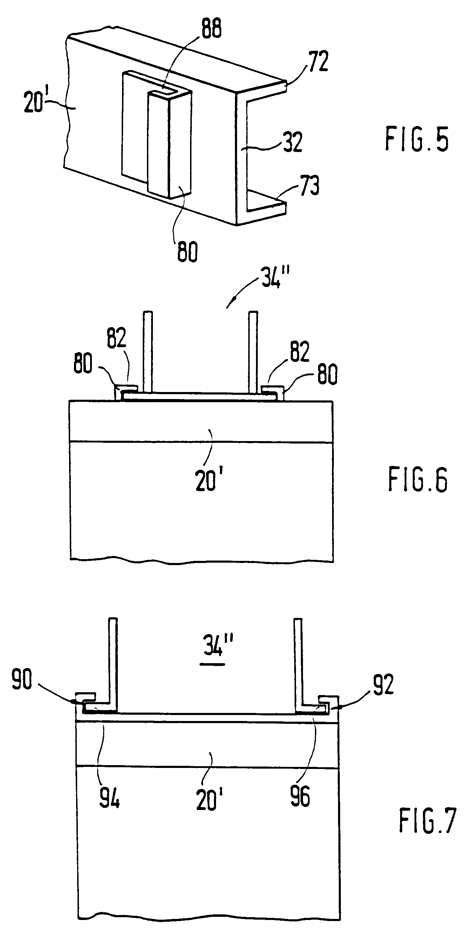

In Fig. 5 ist eine aus einem offenen Profilstück bestehende Halterung 20' dargestellt, die einen in horizontalem Querschnitt U-förmigen Profilabschnitt 80 besitzt, der mit einer Feder 82 des Haltestückes 34" lösbar verbindbar ist. Der Profilabschnitt 80 bildet eine Nut 88, in die die Feder 82 von oben nach unten einsteckbar ist. Die Nut 88 kann allerdings auch so gebildet sein, daß die vertikal sich erstreckenden Enden der U-förmigen Halterung 20' zum Haltestück 34" hin unter Bildung von einander zugekehrten Nuten 90 und 92 abgebogen sind, die mit Federn 94 und 96 des Haltestückes 34" form- und kraftschlüssig verbindbar sind.

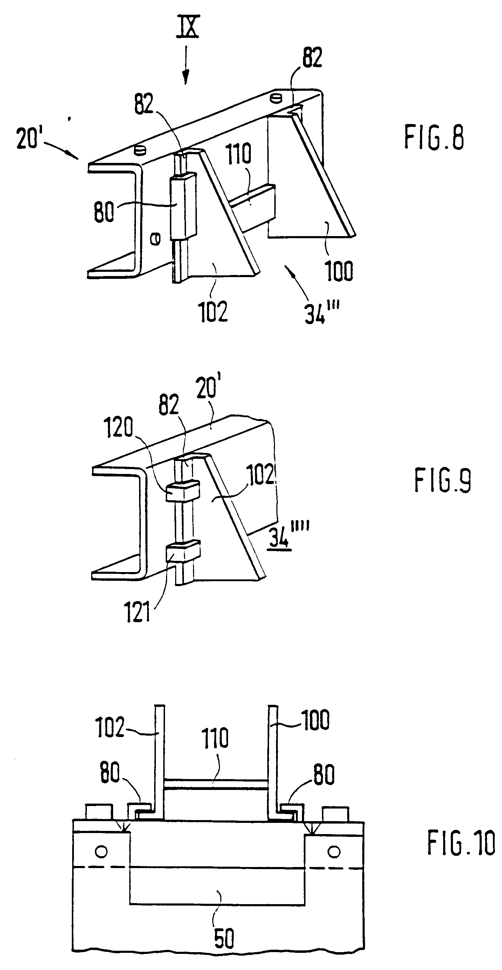

Die Fig. 8 und 10 zeigen eine Verbindung in perspektivischer Seitenansicht bzw. von oben, wobei zu erkennen ist, daß das Haltestück 34''' aus zwei vom nicht dargestellten Gehäusebock vertikal nach oben abstehenden Profilabschnitten 100 und 102 besteht, die mit dem Gehäusebock starr verbunden sind. Im horizontalen Querschnitt sind die Profilabschnitte 100 und 102 L-förmig, wobei die mit den Nuten 88 der Halterung 20' verbindbaren Schenkel 82 parallel zur Halterung 20' verlaufen. Die Profilabschnitte 100 und 102, deren längerer Schenkel rechtwinklig zur Halterung 20' verlaufen, verjüngen sich nach oben hin und sind miteinander über einen Steg 110 verbunden.

Fig. 9 läßt auch erkennen, daß die Halterung 20' anstatt eines Profilabschnittes 80 zwei mit Abstand zueinander angeordnete U-Stücke 120 und 121 aufweisen kann, in die dann der Schenkel 82 des Haltestückes 34'''' gesteckt werden kann.

## Patentansprüche

1. Waage mit digitaler Anzeige mit einem auf eine Federanordnung mit zwei parallel verlaufenden Blattfedern (10,12) einwirkenden, relativ zu einem Gehäusebock (16) bewegbaren Lastaufnehmer (18), wobei die Blattfedern zusammen mit einer mit dem Gehäusebock verbundenen Halterung (20) und mit einem mit dem Lastaufnehmer verbundenen Tragteil (22) einen Parallelogramm-Wiegemechanismus bilden, mit einem Kondensator (24) mit zwei Kondensatorplatten (12,26), deren Abstand sich bei Belastung des Lastaufnehmers verändert und von denen eine (26) zwischen den Blattfedern angeordnet und mit der Halterung über ein Isolierteil (30) verbunden ist, dessen Kapazität als Maß für die Belastung auswertbar ist, dadurch gekennzeichnet, daß die untere Blattfeder (12) die erste Kondensatorplatte bildet, während die zweite Kondensatorplatte (26) zwischen den beiden Blattfedern (10,12) mit geringem Abstand zur unteren Blattfeder (12) angeordnet ist, und daß die zweite Kondensatorplatte (26) mit der Halterung (20) über das Isolierteil (30) verbunden ist.

2. Waage mit digitaler Anzeige mit einem auf eine Federanordnung mit zwei parallel verlaufenden Blattfedern (10,12) einwirkenden, relativ zu einem Gehäusebock (16) bewegbaren Lastaufnehmer (18), wobei die Blattfedern zusammen mit einer mit dem Gehäusebock verbundenen Halterung (20) und mit einem mit dem lastaufnehmer verbundenen Tragteil (22) einen Parallelogramm-Wiegemechanismus bilden, mit einem Kondensator (24) mit zwei Kondensatorplatten (10,26), deren Abstand sich bei Belastungen des Lastaufnehmers verändert und von denen eine (26) zwischen den Blattfedern angeordnet und mit der Halterung über ein Isolierteil (30) verbunden ist, dessen Kapazität als Maß für die Belastung auswerbar ist, dadurch gekennzeichnet, daß die obere Blattfeder (10) die erste Kondensatorplatte bildet, während die zweite Kondensatorplatte (26) zwischen den beiden Blattfedern (10,12) mit geringem Abstand zur oberen Blattfeder (10) angeordnet ist, und daß die zweite Kondensatorplatte (26) mit der Halterung (20) über das Isolierteil (30) verbunden ist.

3. Waage nach Anspruch 1 oder 2, dadurch gekennzeichnet, daß die die Kondensatorplatte bildende Blattfeder (10 bzw. 12) in ihrer Draufsicht im wesentlichen rechteckförmig ist, wobei die dem Tragteil (22) und die der Halterung (20) zugekehrten Seiten der Blattfeder (10 bzw. 12) Ausschnitte (50,52) besitzen, die sich entlang des Tragteils (22) und der Halterung (20) unter Bildung von Halteschenkeln (60,61, 62,63) erstrecken.

4

4. Waage nach Anspruch 3, dadurch gekennzeichnet, daß die Ausschnitte (50,52) rechteckförmig sind und den Abstand des Zentralabschnittes (55) der Blattfeder von dem Tragteil (22) bzw. der Halterung (20) definieren.

5. Waage nach einem der Ansprüche 1 bis 4, bei der das Tragteil und die Halterung als U-förmige Blechprofile ausgebildet sind, wobei die Schenkel der Blechprofile mit den Blattfedern und die Basis der Halterung mit einem Haltestück des Gehäusebocks verbindbar sind bzw. ist, dadurch gekennzeichnet, daß die dem Haltestück zugekehrte Seite der Halterung Nuten bzw. Federn besitzt, die mit den Federn bzw. Nuten des Haltestückes lösbar verbindbar sind.

6. Waage nach Anspruch 5, bei der sich die Nuten bzw. Federn vertikal erstrecken, dadurch gekennzeichnet, daß die vertikal sich erstreckenden Enden der U-förmigen Halterung (20') zum Haltestück (34") hin unter Bildung von einander zugekehrten Nuten (90,92) abgebogen sind, die mit Federn (94,96) des Haltestücks (34") formund kraftschlüssig verbindbar sind.

7. Waage nach Anspruch 5 oder 6, dadurch gekennzeichnet, daß das Haltestück aus mindestens einem vom Gehäusebock vertikal nach oben abstehenden Profilabschnitt besteht, der mit dem Gehäusebock starr verbunden ist.

8. Waage nach Anspruch 7, dadurch gekennzeichnet, daß der horizontale Querschnitt des Profilabschnittes (100,102) etwa L-förmig ist, wobei der mit der Nut (88) der Halterung (20') verbindbare Schenkel (82) parallel zur Halterung (20') verläuft.

9. Waage nach Anspruch 7 oder 8, dadurch gekennzeichnet, daß mindestens zwei Profilabschnitte (100,102) vorgesehen sind, deren längere Schenkel rechtwinklig zur Halterung (20') verlaufen und sich zu ihrem oberen Ende hin verjüngen.

10. Waage nach Anspruch 9, dadurch gekennzeichnet, daß die Profilabschnitte über einen mit ihnen starr verbundenen Steg (110) verbunden sind.

## Claims

1. Weighing apparatus with a digital indicator, having a load bearing means (18), which acts on a spring arrangement having two plate springs (10, 12) extending parallel to each other, which load bearing means is displaceable relative to a housing block (16), the plate springs forming a parallelogram-shaped weighing mechanism together with a holder (20), which is connected to the housing block, and a supporting means (22), which is connected to the load bearing means, and having a capacitor (24) with two capacitor plates (12, 26), the spacing therebetween varying with the loading of the load bearing means, the capacitance of which is utilisable as a measurement of the loading, one of the capacitor plates (26) being disposed between the plate springs and being connected to the holder by means of an insulating member (30), characterised in that the lower plate spring (12) forms the first capacitor plate, while the second capacitor plate (26) is disposed between the two plate springs (10, 12) with a small spacing from the lower plate spring (12), and in that the second capacitor plate (26) is connected to the holder (20) by means of the insulating member (30).

2. Weighing apparatus with a digital indicator, having a load bearing means (18), which acts on a spring arrangement having two plate springs (10, 12) extending parallel to each other, which load bearing means is displaceable relative to a housing block (16), the plate springs forming a parallelogram-shaped weighing mechanism together with a holder (20), which is connected to the housing block, and a supporting means (22), which is connected to the load bearing means, and having a capacitor (24) with two capacitor plates (12, 26), the spacing therebetween varying with the loading of the load bearing means, the capacitance of which is utilisable as a measurement of the loading, one of the capacitor plates (26) being disposed between the plate springs and being connected to the holder by means of an insulating member (30), characterised in that the upper plate spring (10) forms the first capacitor plate, while the second capacitor plate (26) is disposed between the two plate springs (10, 12) with a small spacing from the upper plate spring (10), and in that the second capacitor plate (26) is connected to the holder (20) by means of the insulating member (30).

3. Weighing apparatus according to claim 1 or 2, characterised in that the plate spring (10 or 12), forming the capacitor plate, has a substantially rectangular configuration when viewed from above, the sides of the plate spring (10 or 12) facing the supporting memmber (22) and the holder (20) having cutaway portions (50, 52) which extend along the supporting member (22) and the holder (20) so as to form retaining arms (60, 61, 62, 63).

4. Weighing apparatus according to claim 3, characterised in that the cutaway portions (50, 52) have rectangular configurations and define the spacing between the central portion (55) of the plate spring and the supporting member (22) or the holder (20).

5. Weighing apparatus according to one of claims 1 to 4, wherein the supporting member and the holder

5

are U-shaped sheet metal profiles, the arms of the sheet metal profiles being connectable to the plate springs, and the base of the holder being connectable to a retaining part of the housing block, characterised in that the side of the holder facing the retaining part has grooves or springs which are detachably connectable to the springs or grooves, respectively, of the retaining part.

6. Weighing apparatus according to claim 5, wherein the grooves or springs extend vertically, characterised in that the vertically extending ends of the U-shaped holder (20′) are bent towards the retaining part (34″) so as to form grooves (90, 92), which face one another and are connectable to springs (94, 96) of the retaining part (34″) in a form- and force-locking manner.

7. Weighing apparatus according to claim 5 or 6, characterised in that the retaining part comprises at least one profile portion, which protrudes vertically upwardly from the housing block and is rigidly connected to the housing block.

8. Weighing apparatus according to claim 7, characterised in that the horizontal cross-section of the profile portion (100, 102) has an approximately L-shaped configuration, the arm (82) being connectable to the groove (88) of the holder (20′) and extending parallel to the holder (20′).

9. Weighing apparatus according to claim 7 or 8, characterised in that at least two profile portions (100, 102) are provided, the longer arms of which extend at right angles to the holder (20′) and taper towards their upper ends.

10. Weighing apparatus according to claim 9, characterised in that the profile portions are connected by means of a cross-piece member (110), which is rigidly connected thereto.

**Revendications**

1. Balance à affichage digital avec un plateau récepteur de la charge (18) mobile par rapport à ion chevalet. de support (16) et agissant sur une disposition à ressorts comportant deux lames de ressort parallèles (10, 12), les lames de ressort conjointement avec une fixation (20) reliée au chevalet de support et avec un élément porteur (22) relié au plateau récepteur de la charge constituant un mécanisme de pesage en parallélogramme avec un condensateur (24) avec deux plaques (12,26) de condensateur, plaques dont la distance l'une à l'autre est modifiée lorsque le plateau récepteur de la charge est soumis à une charge et dont l'une (26) est disposée entre les lames de ressort et est reliée par l'intermédiaire d'une pièce isolante (30) à la fixation, condensateur dont la capacité est utilisée comme mesure de la charge , caractérisée en ce que la lame de ressort inférieure (12) constitue la première plaque de condensateur, tandis que la deuxième plaque de condensateur (26) est disposée entre les deux lames de ressort (10, 12) à faible distance de la lame de ressort inférieure (12), et en ce que la deuxième plaque de condensateur (26) est reliée par l'intermédiaire d'une pièce isolante (30) à la fixation (20).

2. Balance à affichage digital avec un plateau récepteur de la charge (18) mobile par rapport à un chevalet de support (16) et agissant sur une disposition à ressorts comportant deux lames de ressort parallèles (10, 12), les lames de ressort conjointement avec une fixation (20) reliée au chevalet de support et avec un élément porteur (22) relié au plateau récepteur de la charge constituant un mécanisme de pesage en parallélogramme avec un condensateur (24) avec deux plaques (12,26) de condensateur, plaques dont la distance l'une à l'autre est modifiée lorsque le plateau récepteur de la charge est soumis à une charge et dont l'une (26) est disposée entre les lames de ressort et est reliée par l'intermédiaire d'une pièce isolante (30) à la fixation, condensateur dont la capacité est utilisée comme mesure de la charge , caractérisée en ce que la lame de ressort supérieure (10) constitue la première plaque de condensateur, tandis que la deuxième plaque de condensateur (26) est disposée entre les deux lames de ressort (10, 12) à faible distance de la lame de ressort supérieure (10), et en ce que la deuxième plaque de condensateur (26) est reliée par l'intermédiaire d'une pièce isolante (30) à la fixation (20).

3. Balance suivant l'une ou l'autre des revendications 1 ou 2, caractérisée en ce que la lame de ressort (10 ou 12) constituant la plaque de condensateur est, en vue en plan, sensiblement de forme rectangulaire, les faces de la lame de ressort ( 10 ou 12) orientées vers l'élément porteur (22) et vers la fixation (20) présentant des découpures (50, 52) , disposées le long de l'élément porteur (22) et de la fixation (20) avec formation d'ailes de fixation (50, 51, 62, 63).

4. Balance suivant la revendication 3, caractérisée en ce que les découpures (50, 52) sont de forme rectangulaire et définissent la distance entre le tronçon central (55) de la lame de ressort d'une part et l'élément porteur (22) ou la fixation (20) d'autre part.

5. Balance suivant l'une quelconque des revendications de 1 à 4, dans laquelle l'élément porteur et la fixation sont des profilés en tôle en forme de U, les ailes des profilés en tôle pouvant être reliées aux lames de ressort et la base de la fixation pouvant être reliée à une pièce de fixation du chevalet de support, caractérisée en ce que la face de la fixation qui est orientée vers la pièce de fixation présente des rainures ou des ressorts, qui peuvent être reliés de manière amovible avec les ressorts ou avec les rainures de la pièce de fixation.

6. Balance suivant la revendication 5, dans laquelle les rainures ou les ressorts sont disposés verticalement, caractérisée en ce que les extrémités disposées verticalement de la fixation en forme de U (20′) sont cintrées en direction de la pièce de fixation (34″) avec formation de rainures (90, 92) orientées l'une vers l'autre, qui peuvent être reliées par similarité de forme et de manière solide avec des ressorts (94, 96) de la pièce de fixation (34″).

7. Balance suivant l'une ou l'autre des revendications 5 ou 6, caractérisée en ce que la pièce de fixation est constituée par au moins un tronçon profilé issu verticalement vers le haut du chevalet de support et relié rigidement au chevalet de support.

8. Balance suivant la revendication 7, caractérisée en ce que la section transversale horizontale du tronçon profilé (100, 102) est sensiblement en forme de L, dont l'aile (82) qui peut être reliée à la rainure (88) de la fixation (20′) est disposée parallèlement à la fixation (20′).

9. Balance suivant l'une ou l'autre des revendications 7 ou 8, caractérisée en ce qu' au moins deux tronçons profilés (100, 102) sont prévus, dont les ailes les plus longues sont disposées perpendiculairement à la fixation (20′) et s'amincissent en direction de leur extrémité supérieure.

10. Balance suivant la revendication 9, caractérisée en ce que les tronçons profilés sont reliés rigidement à une traverse (110).

FIG.1

FIG.2

FIG.3

FIG.4

FIG.5

FIG.6

FIG.7

IX

FIG.8

20'

82

82

110

80

100

102

34'''

120

82

20'

FIG.9

102

34''''

121

102

110

100

80

80

FIG.10

50